# FASCICULE DE BREVET EUROPEEN

(11) **EP 3 190 688 B1**
(45) Date de publication et mention de la délivrance du brevet: **27.05.2020**
(21) Numéro de dépôt: 16204111.5
(22) Date de dépôt: 14.12.2016
(51) Int. Cl.: H02K 11/25

(54) **STATOR POUR MACHINE ELECTRIQUE TOURNANTE**
STATOR FÜR ELEKTRISCH UMLAUFENDE MASCHINE
STATOR FOR ROTARY ELECTRIC MACHINE

(30) Priorité: 05.01.2016 FR 1650029
(43) Date de publication de la demande: 12.07.2017
(73) Titulaire: VALEO EQUIPEMENTS ELECTRIQUES MOTEUR, 94046 Créteil Cedex (FR)
(72) Inventeur: Ben-Omrane, Ryadh, 94550 Chevilly-Larue (FR); MONTEIL, Christophe, 75011 Paris (FR)

(56) Documents cités:
- WO-A2-2013/030644
- WO-A2-2014/041265
- JP-A- 2003 092 858
- JP-A- 2013 225 959
- US-A1- 2010 270 873
- US-A1- 2015 155 760
- US-B2- 8 653 708

## Description

L'invention concerne notamment un stator pour une machine électrique tournante.

L'invention trouve une application particulièrement avantageuse dans le domaine des machines électriques tournantes telles que les alternateurs ou encore les machines réversibles. On rappelle qu'une machine réversible est une machine électrique tournante apte à travailler de manière réversible, d'une part, comme générateur électrique en fonction alternateur et, d'autre part, comme moteur électrique notamment pour démarrer le moteur thermique du véhicule automobile.

Une machine électrique tournante comprend un rotor mobile en rotation autour d'un axe et un stator fixe entourant le rotor. En mode alternateur, lorsque le rotor est en rotation, il induit un champ magnétique au stator qui le transforme en courant électrique afin d'alimenter l'électronique du véhicule et de recharger la batterie. En mode moteur, le stator est alimenté électriquement et induit un champ magnétique entraînant le rotor en rotation.

Le stator est pourvu d'un bobinage électrique comprenant une pluralité de conducteurs électriques. Lors du fonctionnement de la machine électrique tournante, ces conducteurs électriques chauffent jusqu'à un certain niveau de température. Si ce niveau de température est trop élevé, la machine électrique tournante peut être endommagée. Il est important de connaître de manière la plus précise possible la température du bobinage électrique, notamment en vue de commander la machine électrique tournante pour éviter toute surchauffe.

Les documents JP 2013-225959, US 8653708, US 2010/270873, WO 2014/041265, US 2015/155760 JP 2003 092858 et WO 2013/030644 décrivent tous des stators comportant un bobinage électrique et des capteurs de température montés de manière proche du bobinage pour déterminer sa température.

La présente invention vise à permettre de déterminer la température du bobinage d'un stator de manière précise et fiable.

A cet effet, la présente invention a donc pour objet un stator pour une machine électrique tournante de véhicule automobile selon la revendication 1.

La pièce rapportée montée sur le bobinage permet que l'élément sensible qui mesure la température soit le plus proche possible du bobinage du stator. Ainsi, la température du bobinage du stator est mesurée de manière fiable et précise. Grâce à la présente invention, il est donc possible de commander la machine électrique tournante pour éviter une surchauffe du stator qui pourrait endommager ladite machine. En outre, la pièce rapportée permet également de protéger la sonde de mesure.

Selon l'invention, l'élément sensible est agencé de manière à être en contact thermique avec au moins un conducteur électrique par l'intermédiaire de la pièce rapportée.

Selon l'invention, chaque conducteur électrique présente une forme de barreau telle qu'une épingle.

En outre selon l'invention, la pièce rapportée comprend un organe de montage agencé pour monter ladite pièce sur un tronçon de conducteur électrique chevauchant un sommet d'un chignon du bobinage.

Notamment, l'élément sensible est agencé de manière à être en contact thermique avec au moins un conducteur électrique par l'intermédiaire d'une paroi de la pièce rapportée.

Dans un exemple avantageux de mise en œuvre, la pièce rapportée comporte un logement destiné à recevoir la sonde de mesure.

Selon un exemple avantageux de réalisation, le logement présentant une paroi avant en regard du bobinage, l'élément sensible est positionné dans le logement en contact axial avec la paroi avant laquelle étant en contact avec le conducteur électrique.

De plus, de manière avantageuse, le logement présente une forme agencée pour maintenir la sonde de mesure.

Selon un exemple avantageux de mise en œuvre, le logement comporte une partie de maintien qui est configurée de manière à maintenir la sonde de mesure. Par exemple, la partie de maintien présente une forme de cylindre dont l'une des extrémités est fermée.

Avantageusement, la pièce rapportée comporte une partie d'insertion débouchante dans le logement et permettant l'insertion du matériau dans le logement. La partie d'insertion présente avantageusement une forme convergente vers le logement.

Selon un exemple avantageux de mise en œuvre, le logement comporte au moins une rainure de maintien. Avantageusement, la rainure de maintien s'étend en saillie à partir d'une paroi du logement. Toujours avantageusement, la rainure de maintien s'étend dans une direction axiale. Cette rainure de maintien permet d'améliorer le maintien de la sonde de mesure.

Notamment, le logement comporte plusieurs rainures de maintien. Avantageusement, ces rainures de maintien s'étendent, respectivement, à partir de la paroi avant du logement et à partir de la paroi arrière, opposée axialement à la paroi avant. Avantageusement, les rainures de maintien de la paroi avant et celle de la paroi arrière sont décalées le long du logement. En d'autres termes, ces rainures ne sont pas en regard les unes des autres.

Selon un exemple avantageux de mise en œuvre, une paroi du logement s'étend dans une direction qui forme un angle non nul avec un plan radial par rapport à l'axe du stator. Cela permet également d'améliorer le maintien de la sonde de mesure. Par exemple, ladite paroi du logement est la paroi avant.

Avantageusement, le logement comporte un matériau dans lequel est noyée, au moins partiellement, la sonde de mesure. Cela permet également d'améliorer le maintien de la sonde de mesure en lui garantissant une position précise et permet également de protéger ladite sonde de mesure.

Par exemple, ce matériau est une résine. En variante, ce matériau peut être un vernis ou une colle.

De manière avantageuse, le logement comporte une ouverture agencée pour permettre l'insertion de la sonde de mesure. Avantageusement, cette ouverture est également agencée pour permettre l'insertion du matériau dans le logement.

Par exemple, l'organe de montage comporte, avantageusement, une patte d'encliquetage coopérant avec le bobinage. En variante, la pièce rapportée peut être montée sur le bobinage par soudage ou par collage ou par vissage ou encore par ficelage.

Dans un exemple avantageux de réalisation, chaque conducteur électrique présente une forme de barreau telle qu'une épingle, la pièce rapportée étant montée sur un tronçon de conducteur électrique chevauchant un sommet du chignon.

Avantageusement, la pièce rapportée est formée d'un matériau thermiquement conducteur. Cela permet d'améliorer la fiabilité de la mesure de la température du bobinage. De plus, ce matériau est, notamment, électriquement isolant.

Da manière avantageuse, la pièce rapportée comporte un matériau plastique.

En outre, la pièce rapportée est, avantageusement, monobloc.

Selon un mode avantageux de mise en œuvre, la sonde de mesure est un capteur à coefficient thermique négatif (NTC).

De manière avantageuse, la sonde de mesure comporte, en outre, au moins un fil électrique agencé pour transmettre un signal électrique à un ensemble électronique, l'ensemble électronique étant notamment monté sur la machine électrique tournante.

Avantageusement, le logement comporte, en outre, une ouverture agencée pour permettre le passage d'au moins un fil électrique de la sonde de mesure vers l'ensemble électronique. Par exemple, cette ouverture et celle permettant l'insertion de la sonde de mesure forment une seule ouverture.

Dans un exemple avantageux de réalisation, la pièce rapportée est agencée sur un chignon du stator, notamment en regard de l'ensemble électronique.

La présente invention a également pour objet une machine électrique tournante. La machine électrique tournante peut, avantageusement, former un alternateur ou une machine réversible.

La présente invention pourra être mieux comprise à la lecture de la description détaillée qui va suivre, d'exemples de mise en œuvre non limitatifs de l'invention et de l'examen des dessins annexés, sur lesquels :
- la figure 1 représente, schématiquement et partiellement, une vue en coupe d'une machine électrique tournante selon un exemple de mise en œuvre de l'invention,
- la figure 2 représente, schématiquement et partiellement, une vue en perspective d'un exemple de stator de la figure 1,
- la figure 3 représente, schématiquement et partiellement, une vue en perspective d'un exemple de pièce rapportée de la figure 1,
- la figure 4 représente, schématiquement et partiellement, une vue en coupe de la pièce rapportée de la figure 3,
- la figure 5 représente, schématiquement et partiellement, une vue en perspective d'un autre exemple de pièce rapportée de la figure 1,
- la figure 6 représente, schématiquement et partiellement, une vue de côté d'un exemple de réalisation de la pièce rapportée de la figure 5,
- la figure 7 représente, schématiquement et partiellement, une vue en coupe de la pièce rapportée de la figure 5,
- la figure 8 représente, schématiquement et partiellement, une vue en perspective d'un autre exemple de pièce rapportée de la figure 1,
- la figure 9 représente, schématiquement et partiellement, une vue en perspective d'un exemple de réalisation de la pièce rapportée de la figure 8,
- la figure 10 représente, schématiquement et partiellement, une vue en coupe de la pièce rapportée de la figure 8, et
- la figure 11 représente, schématiquement et partiellement, une vue de dessous de la pièce rapportée de la figure 8.

Les éléments identiques, similaires ou analogues conservent les mêmes références d'une figure à l'autre.

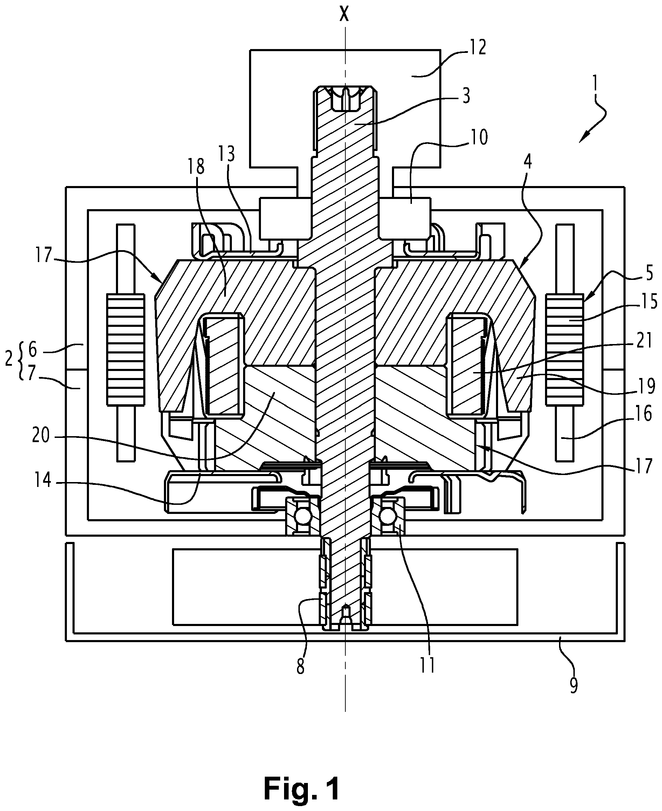

La figure 1 représente une machine électrique tournante 1 compacte et polyphasée, notamment pour véhicule automobile. Cette machine électrique tournante 1 transforme de l'énergie mécanique en énergie électrique, en mode alternateur, et peut fonctionner en mode moteur pour transformer de l'énergie électrique en énergie mécanique. Cette machine électrique tournante 1 est, par exemple, un alternateur ou une machine réversible.

La machine électrique tournante 1 comporte un carter 2. A l'intérieur de ce carter 2, elle comporte, en outre, un arbre 3, un rotor 4 solidaire en rotation de l'arbre 3 et un stator 5 entourant le rotor 4. Le mouvement de rotation du rotor 4 se fait autour d'un axe X. Dans la suite de la description les orientations radiales, ortho-radiale et axiales sont à considérer par rapport à cet axe X.

Dans cet exemple, le carter 2 comporte un palier avant 6 et un palier arrière 7 qui sont assemblés ensemble. Ces paliers 6, 7 sont de forme creuse et portent, chacun, centralement un roulement à billes 10, 11 respectif pour le montage à rotation de l'arbre 3.

Une poulie 12 est fixée sur une extrémité avant de l'arbre 3, au niveau du palier avant 6, par exemple à l'aide d'un écrou en appui sur le fond de la cavité de cette poulie. Cette poulie 12 permet de transmettre le mouvement de rotation à l'arbre 3.

L'extrémité arrière de l'arbre 3 porte, ici, des bagues collectrices appartenant à un collecteur. Des balais appartenant à un porte-balais 8 sont disposés de façon à frotter sur les bagues collectrices. Le porte-balais 8 est relié à un régulateur de tension compris dans un pont redresseur 9.

Le palier avant 6 et le palier arrière 7 peuvent comporter, en outre, des ouvertures sensiblement latérales pour le passage de l'air en vue de permettre le refroidissement de la machine électrique tournante par circulation d'air engendrée par la rotation d'un ventilateur avant 13 sur la face dorsale avant du rotor 4, c'est-à-dire au niveau du palier avant 6 et d'un ventilateur arrière 14 sur la face dorsale arrière du rotor, c'est-à-dire au niveau du palier arrière 7.

Dans cet exemple de réalisation, le stator 5 comporte un corps 15 en forme d'un paquet de tôles doté d'encoches, par exemple du type semi fermée ou ouverte, équipées d'isolant d'encoches pour le montage d'un bobinage électrique 16. Ce bobinage 16 traverse les encoches du corps 15 et forment un chignon avant et un chignon arrière de part et d'autre du corps du stator. Le bobinage 16 est connecté, par exemple, en étoile ou encore en triangle. Ce bobinage 16 comporte une pluralité de conducteurs électriques 22.

Dans cet exemple, le rotor 4 est un rotor à griffe. Il comporte deux roues polaires 17. Chaque roue polaire 17 est formée d'un flasque 18 et d'une pluralité de griffes 19 formants des pôles magnétiques. Le flasque 18 est d'orientation transversale et présente, par exemple, une forme sensiblement annulaire. Ce rotor 4 comporte, en outre, un noyau 20 cylindrique qui est intercalé axialement entre les roues polaires 17. Ici, ce noyau 20 est formé de deux demi noyaux appartenant chacun à l'une des roues polaires 17. Le rotor 4 comporte, entre le noyau 20 et les griffes 19, une bobine 21 comportant, ici, un moyeu de bobinage et un bobinage électrique sur ce moyeu. Par exemple, les bagues collectrices appartenant au collecteur sont reliées par des liaisons filaires à ladite bobine. Le rotor 4 peut également comporter des éléments magnétiques interposés entre deux griffes adjacentes.

Lorsque le bobinage électrique est alimenté électriquement à partir des balais, le rotor 4 est magnétisé et devient un rotor inducteur avec formation de pôles magnétiques Nord-Sud au niveau des griffes 19. Ce rotor inducteur crée un courant induit alternatif dans le stator induit lorsque l'arbre 3 est en rotation. Le pont redresseur 9 transforme alors ce courant induit alternatif en un courant continu, notamment pour alimenter les charges et les consommateurs du réseau de bord du véhicule automobile ainsi que pour recharger sa batterie.

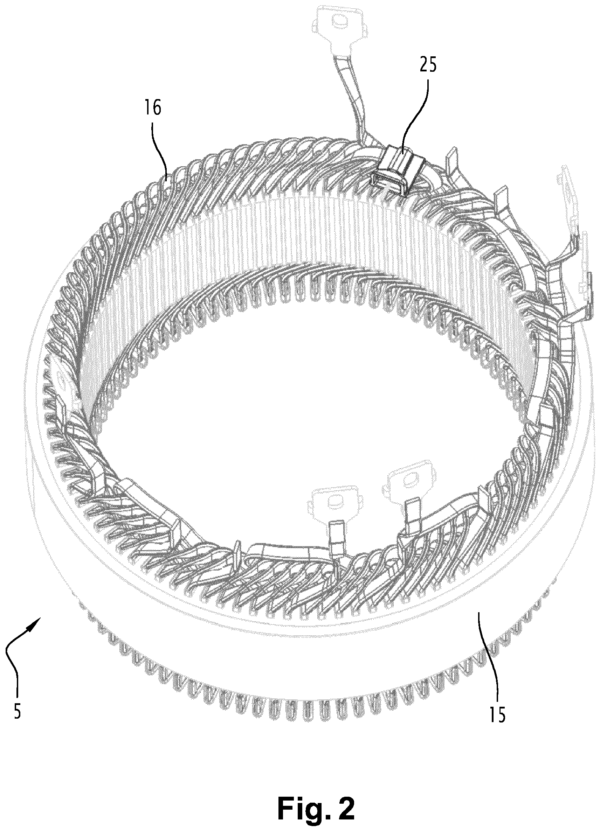

La figure 2 illustre un exemple de stator 5 pour une machine électrique tournante 1 de véhicule automobile. En outre, le stator 5 comporte :
- au moins une pièce rapportée 25 montée sur le bobinage 16,
- au moins une sonde de mesure 23 de température portée par ladite pièce rapportée 25 et comportant au moins un élément sensible 24 agencé de manière à mesurer la température du bobinage 16.

De préférence, l'élément sensible 24 est agencé de manière à être en contact thermique avec au moins un conducteur électrique 22 par l'intermédiaire de la pièce rapportée 25.

Notamment, l'élément sensible 24 est agencé de manière à être en contact thermique avec au moins un conducteur électrique 22 par l'intermédiaire d'une paroi de la pièce rapportée 25.

Dans les différents exemples représentés, la pièce rapportée 25 comporte un logement 26 destiné à recevoir la sonde de mesure 23.

Toujours dans ces exemples, le logement 26 présentant une paroi avant 27 en regard du bobinage 16, l'élément sensible 24 est positionné dans le logement 26 en contact axial avec la paroi avant 27 laquelle étant en contact avec le conducteur électrique 22.

Le logement 26 présente, dans ces exemples, une forme agencée pour maintenir la sonde de mesure 23.

De plus, le logement 26 comporte, ici, un matériau 28 dans lequel est noyée, au moins partiellement, la sonde de mesure 23.

Par exemple, le matériau 28 est une résine.

En variante, le matériau 28 peut être un vernis ou une colle.

En outre, le logement 26 comporte, ici, une ouverture 29 agencée pour permettre l'insertion de la sonde de mesure 23. De préférence, cette ouverture 29 est également agencée pour permettre l'insertion du matériau 28 dans le logement 26.

La pièce rapportée 25 comprend, dans ces exemples, un organe de montage 30 agencé pour monter la pièce rapportée 25 sur le bobinage 16. L'organe de montage 30 comporte une patte d'encliquetage coopérant avec le bobinage 16. En variante, la pièce rapportée 25 peut être montée sur le bobinage 16 par soudage ou par collage ou par vissage ou encore par ficelage.

Dans l'exemple représenté ici, les conducteurs électriques 22 sont, chacun, en forme de barres telles que des épingles reliées entre elles. En variante, le bobinage 16 peut-être obtenu à partir d'un fil continu recouvert d'émail.

La pièce rapportée 25 est, ici, agencée sur un des chignons du stator 5. Par exemple, la pièce rapportée 25 est agencée sur le chignon arrière en regard d'un ensemble électronique. L'ensemble électronique est, ici, monté sur la partie arrière de la machine électrique tournante, c'est-à-dire opposée axialement à la poulie 12.

Dans ces exemples, la pièce rapportée 25 est montée sur un tronçon de conducteur électrique 22 chevauchant un sommet du chignon.

De préférence, la pièce rapportée 25 est formée d'un matériau thermiquement conducteur. De plus, ce matériau est, notamment, électriquement isolant. Par exemple, la pièce rapportée 25 comporte un matériau plastique.

Toujours de préférence, la pièce rapportée 25 est monobloc.

De préférence, la sonde de mesure 23 est un capteur à coefficient thermique négatif (NTC).

En outre, la sonde de mesure 23 comporte, ici, au moins un fil électrique 34 agencé pour transmettre un signal électrique à l'ensemble électronique.

De plus, dans ces exemples, le logement 26 comporte une ouverture agencée pour permettre le passage d'au moins un fil électrique 34 de la sonde de mesure 23 vers l'ensemble électronique. Par exemple, cette ouverture et l'ouverture 29 permettant l'insertion de la sonde de mesure forment une seule ouverture.

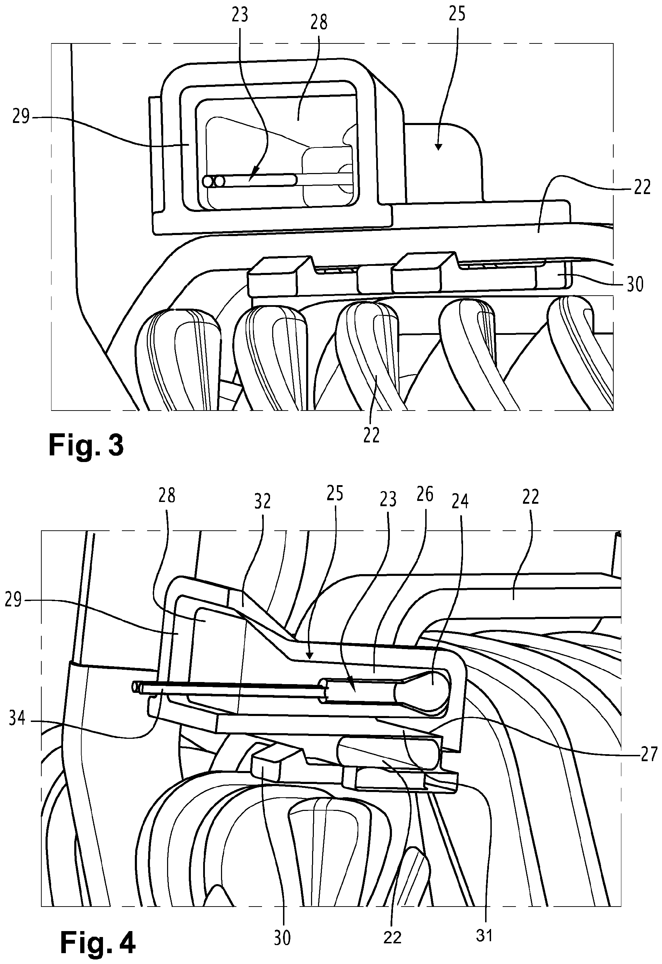

Les figures 2, 3 et 4 présentent un premier exemple de réalisation de la pièce rapportée 25.

Dans ce premier exemple, le logement 26 comporte une partie de maintien 31 qui est configurée de manière à maintenir la sonde de mesure 23.

En outre, la pièce rapportée 25 comporte, ici, une partie d'insertion 32 débouchante dans le logement 26 et permettant l'insertion du matériau 28 dans ledit logement 26.

Par exemple, la partie de maintien 31 présente une forme de cylindre dont l'une des extrémités est fermée.

Par exemple, la partie d'insertion 32 présente une forme convergente vers le logement 26.

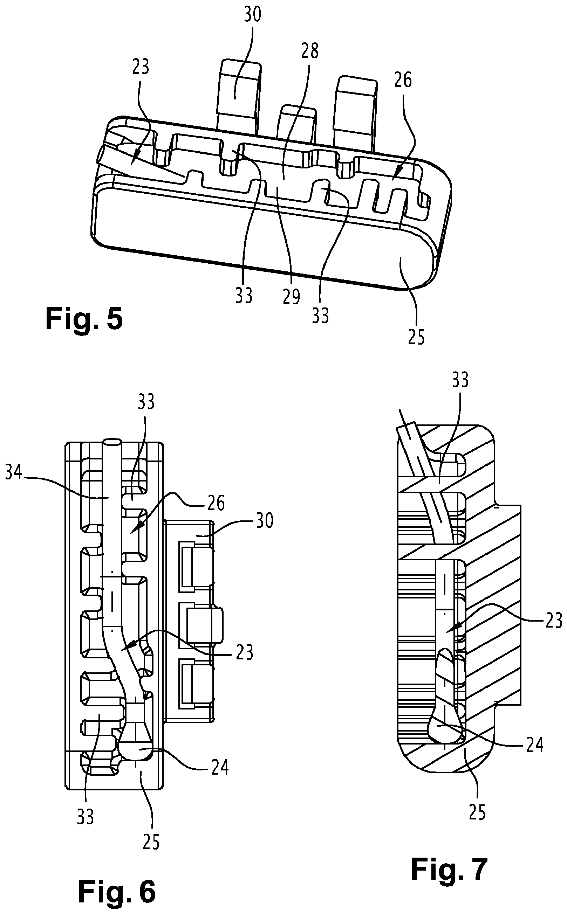

Les figures 5, 6 et 7 présentent un deuxième exemple de réalisation de la pièce rapportée 25.

Dans ce deuxième exemple, le logement 26 comporte au moins une rainure de maintien 33.

La rainure de maintien 33 s'étend, par exemple, en saillie à partir d'une des parois du logement 26.

En outre, la rainure de maintien 33 s'étend, ici, dans une direction axiale.

Par exemple, le logement 26 comporte plusieurs rainures de maintien 33. Dans ce cas, ces rainures de maintien 33 peuvent s'étendre, respectivement, à partir de la paroi avant 27 du logement 26 et à partir de la paroi arrière, opposée axialement à la paroi avant 27.

Toujours par exemple, les rainures de maintien 33 de la paroi avant 27 et celle de la paroi arrière sont décalées le long du logement 26. En d'autres termes, ces rainures de maintien 33 ne sont pas en regard les unes des autres.

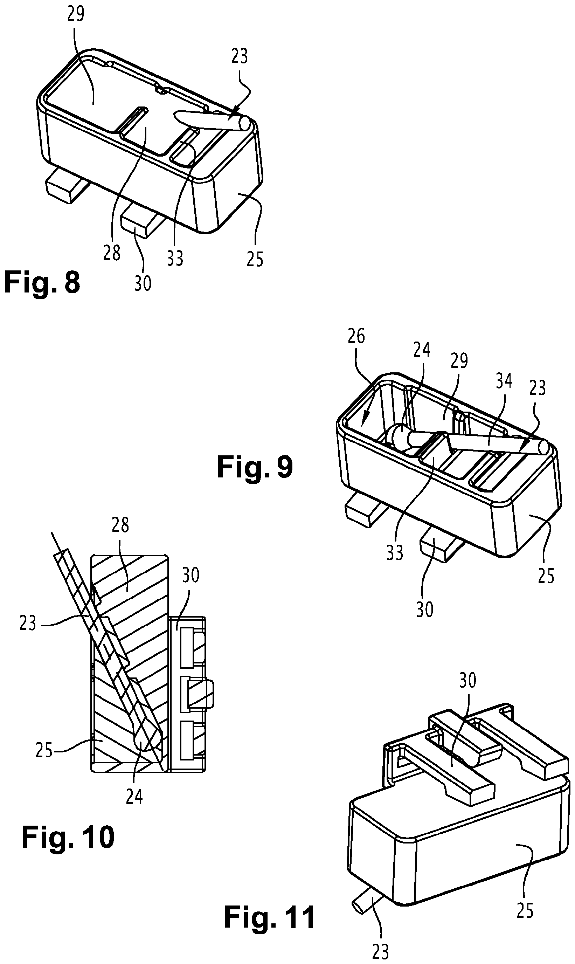

Les figures 8, 9, 10 et 11 présentent un troisième exemple de réalisation de la pièce rapportée 25.

Dans ce troisième exemple, une des parois du logement 26 s'étend dans une direction qui forme un angle non nul avec un plan radial de l'axe X. Par exemple, ladite paroi du logement 26 est la paroi avant 27.

De plus, dans ce troisième exemple, le logement 26 comporte au moins une rainure de maintien 33. La rainure de maintien 33 s'étend, ici, en saillie à partir d'une des parois du logement 26. En outre, la rainure de maintien 33 s'étend, ici, dans une direction transversale.

Le fait de positionner la sonde de mesure le plus proche possible du bobinage électrique du stator, et notamment en contact thermique avec ce bobinage via la pièce rapportée, permet de garantir une mesure fiable et précise de la température dudit bobinage. De plus, cette disposition de la sonde de mesure permet de conserver des performances optimales du stator.

Le fait d'utiliser une pièce rapportée permet de maintenir, de manière simple et sûre, la sonde afin de garantir une mesure précise de la température. En outre, la pièce rapportée permet également de protéger la sonde de mesure.

La présente invention trouve des applications en particulier dans le domaine des stators pour alternateur ou machine réversible de véhicule automobile mais elle pourrait également s'appliquer à tout type de machine tournante.

Bien entendu, la description qui précède a été donnée à titre d'exemple uniquement et ne limite pas le domaine de la présente invention dont on ne sortirait pas en remplaçant les différents éléments par tous autres équivalents.

## Revendications

1. Stator pour machine électrique tournante de véhicule automobile, le stator (5) comportant :
- un corps de stator (15),
- un bobinage (16) électrique, ce bobinage comportant une pluralité de conducteurs électriques (22), chaque conducteur électrique présentant une forme de barreau tel qu'une épingle, le bobinage formant un chignon avant et un chignon arrière de part et d'autre du corps du stator,
- au moins une pièce rapportée (25) comprenant un organe de montage (30),
- au moins une sonde de mesure (23) de température portée par ladite pièce rapportée (25) et comportant au moins un élément sensible (24) agencé de manière à mesurer la température du bobinage (16) en étant en contact thermique avec au moins un conducteur électrique (22) par l'intermédiaire de la pièce rapportée (25) ;
le stator étant **caractérisé en ce que** l'organe de montage (30) comporte une patte d'encliquetage coopérant avec un tronçon de conducteur électrique (22) chevauchant un sommet d'un chignon du bobinage (16) pour monter ladite pièce (25) sur ledit tronçon de conducteur.

2. Stator selon la revendication 1, **caractérisé en ce que** la pièce rapportée (25) comporte un logement (26) destiné à recevoir la sonde de mesure (23).

3. Stator selon la revendication 2, **caractérisé en ce que**, le logement (26) présentant une paroi avant (27) en regard du bobinage (16), l'élément sensible (24) est positionné dans le logement (26) en contact axial avec la paroi avant (27) laquelle étant en contact avec le conducteur électrique (22).

4. Stator selon la revendication 2 ou 3, **caractérisé en ce que** le logement (26) présente une forme agencée pour maintenir la sonde de mesure (23).

5. Stator selon l'une quelconque des revendications 2 à 4, **caractérisé en ce que** le logement (26) comporte au moins une rainure de maintien (33).

6. Stator selon l'une quelconque des revendications 2 à 5, **caractérisé en ce qu'**une paroi du logement (26) s'étend dans une direction qui forme un angle non nul avec un plan radial par rapport à l'axe (X) du stator (5).

7. Stator selon l'une quelconque des revendications 2 à 6, **caractérisé en ce que** le logement (26) comporte un matériau (28) dans lequel est noyée, au moins partiellement, la sonde de mesure (23).

8. Stator selon l'une quelconque des revendications 2 à 7, **caractérisé en ce que** le logement (26) comporte une ouverture (29) agencée pour permettre l'insertion de la sonde de mesure.

9. Stator selon l'une quelconque des revendications 1 à 8, **caractérisé en ce que** la pièce rapportée (25) est formée d'un matériau thermiquement conducteur.

10. Stator selon l'une quelconque des revendications 1 à 9, **caractérisé en ce que** la pièce rapportée (25) est monobloc.

11. Stator selon l'une quelconque des revendications 1 à 10, **caractérisé en ce que** la pièce rapportée (25) est agencée sur un chignon du stator (5), notamment en regard d'un ensemble électronique.

12. Machine électrique tournante comprenant un stator selon l'une quelconque des revendications 1 à 11.

13. Machine électrique tournante selon la revendication 12, formant un alternateur ou une machine réversible.

## Patentansprüche

1. Stator für eine rotierende elektrische Maschine eines Kraftfahrzeugs, wobei der Stator (5) umfasst:
- einen Statorkörper (15),
- eine elektrische Wicklung (16), wobei diese Wicklung mehrere elektrische Leiter (22) umfasst, wobei jeder elektrische Leiter eine Stabform wie etwa die Form einer Nadel aufweist, wobei die Wicklung beiderseits des Körpers des Stators einen vorderen Wicklungskopf und einen hinteren Wicklungskopf bildet,
- wenigstens ein Anbauteil (25), das ein Montageelement (30) umfasst,
- wenigstens einen Temperaturmessfühler (23), der von dem Anbauteil (25) getragen wird und wenigstens ein Sensorelement (24) umfasst, das dafür ausgelegt ist, die Temperatur der Wicklung (16) zu messen, indem es über das Anbauteil (25) in thermischem Kontakt mit wenigstens einem elektrischen Leiter (22) steht;
wobei der Stator **dadurch gekennzeichnet ist, dass** das Montageelement (30) eine Rastlasche umfasst, die mit einem Abschnitt eines elektrischen Leiters (22) zusammenwirkt, der eine Oberseite eines Wicklungskopfes der Wicklung (16) übergreift, um das Teil (25) an dem Leiterabschnitt anzubringen.

2. Stator nach Anspruch 1, **dadurch gekennzeichnet, dass** das Anbauteil (25) einen Aufnahmeraum (26) umfasst, der dazu bestimmt ist, den Messfühler (23) aufzunehmen.

3. Stator nach Anspruch 2, **dadurch gekennzeichnet, dass** der Aufnahmeraum (26) eine vordere Wand (27) gegenüber der Wicklung (16) aufweist, wobei das Sensorelement (24) in dem Aufnahmeraum (26) in axialem Kontakt mit der vorderen Wand (27) positioniert ist, welche sich mit dem elektrischen Leiter (22) in Kontakt befindet.

4. Stator nach Anspruch 2 oder 3, **dadurch gekennzeichnet, dass** der Aufnahmeraum (26) eine Form aufweist, die dafür ausgelegt ist, den Messfühler (23) zu halten.

5. Stator nach einem der Ansprüche 2 bis 4, **dadurch gekennzeichnet, dass** der Aufnahmeraum (26) wenigstens eine Haltenut (33) umfasst.

6. Stator nach einem der Ansprüche 2 bis 5, **dadurch gekennzeichnet, dass** sich eine Wand des Aufnahmeraums (26) in einer Richtung erstreckt, welche mit einer in Bezug auf die Achse (X) des Stators (5) radialen Ebene einen von null verschiedenen Winkel bildet.

7. Stator nach einem der Ansprüche 2 bis 6, **dadurch gekennzeichnet, dass** der Aufnahmeraum (26) ein Material (28) umfasst, in welches der Messfühler (23) wenigstens teilweise eingebettet ist.

8. Stator nach einem der Ansprüche 2 bis 7, **dadurch gekennzeichnet, dass** der Aufnahmeraum (26) eine Öffnung (29) umfasst, die dafür ausgelegt ist, das Einsetzen des Messfühlers zu ermöglichen.

9. Stator nach einem der Ansprüche 1 bis 8, **dadurch gekennzeichnet, dass** das Anbauteil (25) aus einem wärmeleitenden Material ausgebildet ist.

10. Stator nach einem der Ansprüche 1 bis 9, **dadurch gekennzeichnet, dass** das Anbauteil (25) einstückig ist.

11. Stator nach einem der Ansprüche 1 bis 10, **dadurch gekennzeichnet, dass** das Anbauteil (25) auf einem Wicklungskopf des Stators (5) angeordnet ist, insbesondere gegenüber einer Elektronikbaugruppe.

12. Rotierende elektrische Maschine, welche einen Stator nach einem der Ansprüche 1 bis 11 umfasst.

13. Rotierende elektrische Maschine nach Anspruch 12, welche einen Wechselstromgenerator oder eine reversible Maschine bildet.

## Claims

1. Stator for a rotating electric machine of a motor vehicle, the stator (5) comprising:
- a stator body (15),
- an electric winding (16), this winding comprising a plurality of electrical conductors (22), each electrical conductor taking the form of a bar such as a pin, the winding forming a front coil end and a rear coil end on either side of the body of the stator,
- at least one added part (25) comprising a mounting member (30),
- at least one temperature measurement probe (23) formed by said added part (25) and comprising at least one sensitive element (24) arranged so as to measure the temperature of the winding (16) by being in thermal contact with at least one electrical conductor (22) via the added part (25);
the stator being **characterized in that** the mounting member (30) comprises a snap-fitting lug cooperating with a section of electrical conductor (22) overlapping a top of a coil end of the winding (16) to mount said part (25) on said section of conductor.

2. Stator according to Claim 1, **characterized in that** the added part (25) comprises a housing (26) intended to receive the measurement probe (23).

3. Stator according to Claim 2, **characterized in that**, the housing (26) having a front wall (27) facing the winding (16), the sensitive element (24) is positioned in the housing (26) in axial contact with the front wall (27), said front wall being in contact with the electrical conductor (22).

4. Stator according to Claim 2 or 3, **characterized in that** the housing (26) has a form arranged to hold the measurement probe (23).

5. Stator according to any one of Claims 2 to 4, **characterized in that** the housing (26) comprises at least one holding groove (33).

6. Stator according to any one of Claims 2 to 5, **characterized in that** a wall of the housing (26) extends in a direction which forms a non-zero angle with a radial plane relative to the axis (X) of the stator (5).

7. Stator according to any one of Claims 2 to 6, **characterized in that** the housing (26) comprises a material (28) in which the measurement probe (23) is at least partially embedded.

8. Stator according to any one of Claims 2 to 7, **characterized in that** the housing (26) comprises an aperture (29) arranged to allow the insertion of the measurement probe.

9. Stator according to any one of Claims 1 to 8, **characterized in that** the added part (25) is formed in a thermally conductive material.

10. Stator according to any one of Claims 1 to 9, **characterized in that** the added part (25) is of a single piece.

11. Stator according to any one of Claims 1 to 10, **characterized in that** the added part (25) is arranged on a coil end of the stator (5), notably facing an electronic assembly.

12. Rotating electric machine comprising a stator according to any one of Claims 1 to 11.

13. Rotating electric machine according to Claim 12, forming an alternator or a reversible machine.
